# EUROPEAN PATENT SPECIFICATION

(11) **EP 3 985 686 B1**
(45) Date of publication and mention of the grant of the patent: **30.11.2022**
(21) Application number: 20461568.6
(22) Date of filing: 14.10.2020
(51) Int. Cl.: G21G 1/02, H05H 6/00

(54) **METHOD OF PREPARATION OF THE URANIUM TARGET FOR THE PRODUCTION OF MOLYBDENUM, MOLYBDENUM PRODUCTION PROCESS AND THE URANIUM TARGET FOR THE PRODUCTION OF MOLYBDENUM**
VERFAHREN ZUR VORBEREITUNG DES URAN-TARGETS ZUR HERSTELLUNG VON MOLYBDÄN, MOLYBDÄNHERSTELLUNGSVERFAHREN UND URAN-TARGET ZUR HERSTELLUNG VON MOLYBDÄN
PROCÉDÉ DE PRÉPARATION D'UNE CIBLE D'URANIUM POUR LA PRODUCTION DE MOLYBDÈNE, PROCESSUS DE PRODUCTION DE MOLYBDÈNE ET DE CIBLE D'URANIUM POUR LA PRODUCTION DE MOLYBDÈNE

(43) Date of publication of application: 20.04.2022
(73) Proprietor: Narodowe Centrum Badan Jadrowych, 05-400 Otwock (PL)
(72) Inventor: Sobkowicz, Pawel, 02-777 Warszawa (PL); Lipka, Maciej, 04-287 Warszawa (PL); Prokopowicz, Rafal, 01-460 Warszawa (PL); Talarowska, Anna, 05-400 Otwock (PL)
(74) Representative: Bury, Marek

(56) References cited:
- EP-A1- 2 681 744
- CN-A- 109 147 965
- KR-B1- 101 674 883
- RU-C1- 2 511 215

## Description

The invention concerns a method of fabricating a uranium target for producing molybdenum from a material irradiated in a reactor, a process of producing molybdenum comprising irradiation of a uranium target in a reactor, and a uranium target for producing molybdenum.

Molybdenum 99 is needed in numerous applications, including medical ones. It cannot be stored for a long time, and more precisely, the storage of Mo-99 is uneconomical because it decomposes naturally with a half-life of 2.75 days.

Molybdenum 99 is usually produced with a use of nuclear reactors or accelerators.

The process for producing molybdenum 99 in a reactor as disclosed in US Patent No. 3,799,883 requires a specially prepared target of uranium-containing material along with the casing, irradiating it in a reactor, and then subjecting it to a multi-step chemical treatment in a laboratory. Transportation of the irradiated target between the reactor and the laboratory requires strong precautions and is consequently cumbersome and time consuming. There are also risks involved in treatment of the irradiated object (target) in so-called hot chambers (adapted for remote manipulation and physical and chemical processes). These risks include in particular the release of radioactive isotopes other than Mo 99, among which the gaseous products of nuclear transformations constitute a significant threat.

Among other things, due to safety requirements, the once used highly-enriched uranium (HEU) is not currently used. Instead, low-enriched uranium (LEU) with the content of the U-235 isotope below 20% is used. The transition from HEU to LEU has reduced the irradiation efficiency, which is additionally limited by the fact that universal target shapes do not fully utilize the space in a reactor. The space where objects in a reactor can be irradiated is known as a chamber or duct; hereinafter the term "chamber" is used.

Publication no WO2006000104 of international patent application discloses a target assembly in which a space is provided for the target and cooling is provided by forced circulation of gas.

Publication no US2012027152 of US patent application discloses a target for producing isotopes comprising a wall with an outside diameter and a wall with an inside diameter. The space between the walls is filled with a material to be irradiated powdered or granular form such that it includes one or more voids and cooling fluid channels. The disadvantage of such a solution is the risk of scattering of the fissile material during its processing and repackaging.

Publication KR101674883 B1 discloses the use of 3D printing with the use of laser sintering for the production of high-density uranium objects having predefined shapes and properties.

Before irradiation in a reactor chamber, the target is placed in a hermetic, usually aluminum container filled with an inert cooling gas. The gas is typically helium, which is inert and does not change when exposed to radiation. The container provides protection against the uncontrolled release of gaseous and non-gaseous nuclear decay products induced by irradiation.

To provide cooling during irradiation, it is required to ensure the flow of gas - most often helium - through the target and the transfer of heat generated inside the target by nuclear processes.

Therefore, targets in the form of thin plates or containers with a granulated material are used - an example of such a solution is disclosed in US20140226774. The use of granulated material, however, further complicates chemical and physical processing required after irradiation to obtain Mo 99, since the processing of granulated material carries the risk of scattering the irradiated material and consequently causing enormous damage. Some analogous applications, such as those disclosed in WO2016081056, use fluid-containing targets - but this involves similar risks.

There are no prior art solutions enabling the production of molybdenum 99 using targets: (i) adapted to the reactor's shape, (ii) enabling gas flow, (iii) ensuring good utilization of the space in containers to be placed in a reactor, (iv) ensuring good utilization of the reactor's neutron beam energy, and at the same time (v) having mechanical cohesion which reduces the risk of contamination of a large space with radioactive substance in case the target material spills or scatters.

It is an object of the invention to solve above problem.

A method of fabricating a target with predetermined mass and volume from low-enriched uranium, in which in a material preparation step, powdered or granular construction material containing low-enriched uranium is prepared, and in a fabrication step, a target shaped so as to enable enclosing it in a container to be placed in a reactor is made of this construction material, the fabrication step being carried out in an additive process by applying successive layers of the construction material and selectively heating by means of a laser, according to the invention is characterized in that prior to the fabrication of the target, a digital model of the target is created with dimensions that fit inside the container and a volume filled with an infill pattern with an effective density less than 80% of the density of uranium; the model defining an openwork cohesive (solid) body. Thanks to this, there is no risk of scattering when removing from the reactor and during transportation. The use of the additive applying is advantageous because the body adapted to additive printing is cohesive and has mechanical strength. Possible mechanical defects of the structure are revealed in the fabrication process rather than after irradiation.

Advantageously, the model of the target is created with dimensions substantially matching the dimensions of the container, such that the model fills the container with a margin ranging from 0.5 mm to 2 mm in each dimension, such that the volume of the model essentially corresponds to the volume of the container, and the voids and the infill pattern of the openwork structure are selected so as to ensure the assumed mass of the target for a given volume.

Advantageously, the arrangement of the voids in the structure of the target and the distribution of the effective infill density are selected in a step of simulation and optimization of the absorption of a given neutron flux. Such a solution leads to further improvement of the efficiency of the reactor utilization.

The arrangement of the voids in the structure of the target is advantageously selected in a step of simulation and optimization of gas flow to maximize cooling during the irradiation step. Such a solution allows one to carry out the process faster while meeting the requirements for maximum temperature.

In the additive process, unused granular material is advantageously collected in a recovery step and stored for reuse.

A process of producing molybdenum comprising a step of fabricating a target from a construction material containing low-enriched uranium, a step of packing the target into a container, a step of irradiating by placing the container with the target in a reactor followed by an unpacking step, a transport step and a step of chemical treatment of the target to obtain molybdenum 99, according to the invention is characterized in that the step of fabricating the target is carried out using the method according to the invention.

Advantageously, during or after the step of chemical treatment, unused uranium is recovered and reused in the preparation of construction material.

The target made of a material containing low-enriched uranium to be placed in a reactor according to the invention is characterized in that it has an openwork cohesive structure made with an infill pattern giving an effective density of less than 80% with respect to Uranium. Due to the fact that the structure is cohesive and openwork, there is no risk of scattering of fissile material dangerous for people, and at the same time good utilization of the neutron beam and the volume of the container, which cannot be filled with solid uranium, can be obtained.

Advantageously, the target is shaped like a hollow cylinder with a central hole.

The hollow cylinder is advantageously provided with additional channels.

The openwork structure advantageously comprises voids and is made according to a mathematical model obtained by optimization in an additive process by applying successive layers of a construction material containing low-enriched uranium and selectively heating this construction material by means of a laser.

The subject of the invention has been illustrated using the embodiments depicted in the drawing in which:
Fig. 1 shows a flowchart of a method of producing molybdenum 99 according to an embodiment of the invention;
Fig. 2A is a perspective view of the target according to an embodiment of the invention, the target being placed in a container adapted to be placed in a reactor;
Fig. 2B shows the same embodiment in the cross section;
Fig. 2C shows the same embodiment in the longitudinal section;
Fig. 3 shows a flowchart of a method of designing a target according to the invention;
Fig. 4A shows a container with the target in the longitudinal section;
Fig. 4B is a perspective view of the container;
Fig. C is a partial cross-sectional view of the target with a lid;
Fig. 4D is a cross-sectional view of the target with a longitudinal section line A-A;
Fig. 4E is a perspective view of the target;and
Fig. 4F shows the longitudinal section of the target through the line A-A.

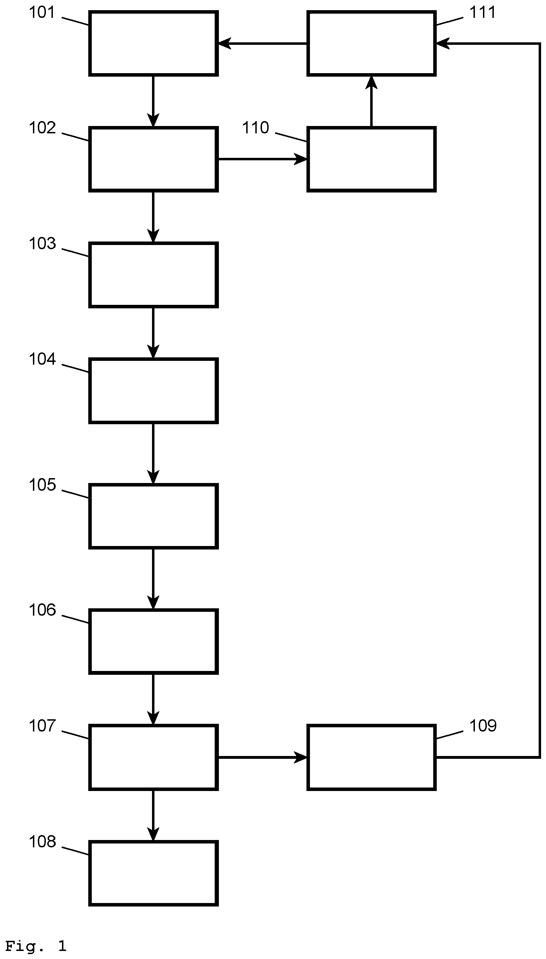

A process of producing molybdenum 99 in an embodiment of the invention proceeds in steps according to the flowchart illustrated in Fig. 1. The process begins with step **101** of the preparation of the construction material for the target **200.** This material is a granulated alloy of LEU and aluminum.

The target **200** is fabricated in the fabrication step 102. The selective laser sintering (SLS) technique has proven well to fabricate uranium targets. The selective laser melting (SLM), also known as direct metal laser melting (DMLM) or laser power bed fusion (LPBF) also works well. In both of these techniques, non-irradiated LEU powder particles are applied with shaping head and successively fused by selectively heating the powder with a laser. Unused material is recovered.

In the laser melting process, only part of the applied powder or granulate is fused. The excess falls off. This excess unused material is recovered in step **110.** It is reusable enriched uranium.

In the step of fabricating **102** the target **200** from the construction material, in an additive process, so-called 3D printing, the construction material is applied using a moving head to form an openwork structure having its volume filled in accordance with an infill pattern of a model of the target **200.**

The model is selected according to the shape of the available container intended to contain the target, to be filled with helium, and to be placed in a reactor chamber. Such containers are usually ready-made and optimized for a given reactor. Depending on the reactor type, it is possible to irradiate a different number of container units. It is important to fully utilize the container space - for the model of the target a margin of lower than 0.5 millimeters in relation to the internal dimensions of the container is assumed.

Thanks to the use of the 3D printing technique, the effective density of the model can be adjusted within a wide range having an upper bound determined by the density of the printed material (uranium) and a lower bound determined by the mechanical strength of the structure. In the 3D printing technique, the design of an infill with a given percentage of density is a routine task largely performed by software.

The infill is usually a repeating structure - a cell used to take up space within the model. There may be empty space inside the cell and between cells. By changing the type and size of the infill cell, one can change the effective density of the model. Common types of infill patterns include: honeycomb, spatial honeycomb, zigzag, concentric. Cellular infill patterns such as honeycomb show good strength.

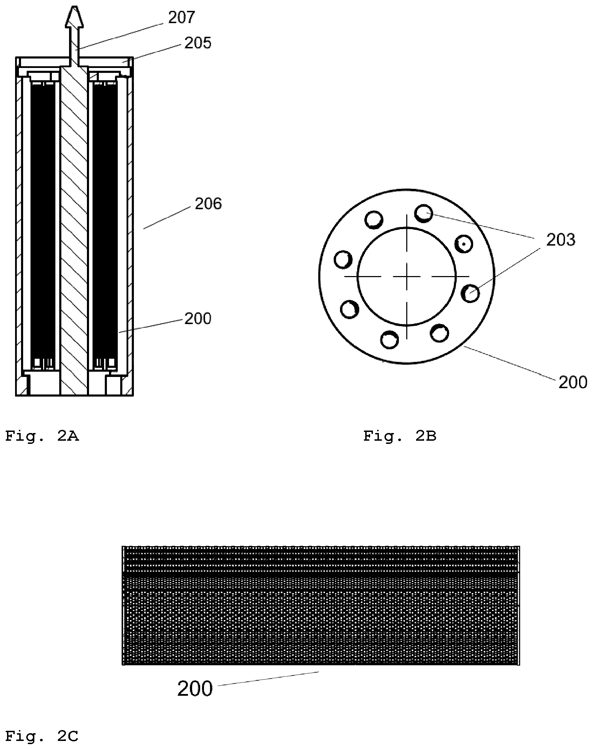

In the embodiment of the invention, the target is fabricated for the given container **206** adapted to be placed in a reactor, shown in a section in Fig. 2A and in a perspective in Fig. 2B. In the container 206 there is the target **200** closed by a lid **205.** The container is provided with a pin **207** for positioning in a reactor.

The structure of the target **200** shown in figures is openwork and adapted to the shape of the container **206.** The container **206** shown in figures has the following internal dimensions: a height of 142 mm and a radius of 22 mm.

The free space in the container shown in a section in Fig. 2A has an inner radius of 10.5 mm and an outer radius of 21 mm. The target **200** shown in Fig. 2B has the outer dimensions adapted to the container with a margin of 1 mm on each side and is provided with 8 cooling water channels. The channels are arranged axially, but they can also be routed in other ways. The target **200** was printed by a 3D printing process with a base cell of the infill pattern 1 mm in size. The design of the target **200** has a volume of 57305 mm³ and contains approximately 21 grams of U-235 enriched at 3.5%.

Both the target **200** and the lid **205** are provided with channels **203** substantially parallel to the axis of the container **206** and the axis of the target **200.** The target is provided with a central hole **201** adapted to receive the positioning pin **207.** This ensures a repeatable positioning of the target **200** in a neutron beam.

The voids of the openwork structure of the target **200** are provided as axial holes **202.** These holes are arranged in a random manner. Their diameters range from 0.5 to 3 mm. This is a compromise since finer holes increase the mechanical strength of the structure, while larger holes facilitate cooling by flow of gas during the irradiation step **104.** The voids may also be arranged in some other manner to guide the gas in a specific manner through the volume of the target.

The method of the invention allows one to fabricate targets adapted to different types of containers and different uranium enrichment degrees. Since the radiation may be utilized in an optimal manner, it is possible to work with uranium with lower enrichment degree.

For example, if a cylindrical container with an inside diameter of 20.5 mm and a height of 40.5 mm is available, a cylindrical model of the target with a diameter of 20 mm and a height of 40 mm is assumed. The volume of the target is 12.566 cm³. The size of the target and its degree of openwork can be adapted to the uranium enrichment degree and the amount of uranium 235 needed in the process. In particular, the method works well with relatively safe low enriched uranium - at the level of 0+ to 19.75%.

Taking LEU with 5% enrichment degree as an available material and assuming that 2 g of uranium 235 is to be obtained, translates to the required target mass of 40 g, because 2 g is 5% of 40 g which is the total mass of uranium (238 +235) in the target.

The mass of 40 g of uranium with a density of 19.05 g/cm³ corresponds to a volume of 2.01 cm³. Thus, the filling ratio of the usable volume of the container equals 2.01 / 12.566 = 16.7%.

For a good utilization of a reactor beam it is essential to fill the entire volume of the container. To meet this condition, an openwork structure is fabricated with an average density equal to 16.7% of that of uranium. The skeleton of the openwork structure of the target takes 0.167 of the volume and the voids in the form of axial holes **202** and the axial hole **201** take 0.833 of the volume. As a first approximation, a structure with a uniform average effective density can be used. However, other preferred designs are available. Cylindrical structures with holes running parallel to the axis of the cylinder and arranged in its cross-section work well. Changing the size of the holes allows one not only to adjust the amount of nuclear material (including in particular the U-235 isotope), but also other features of the target.

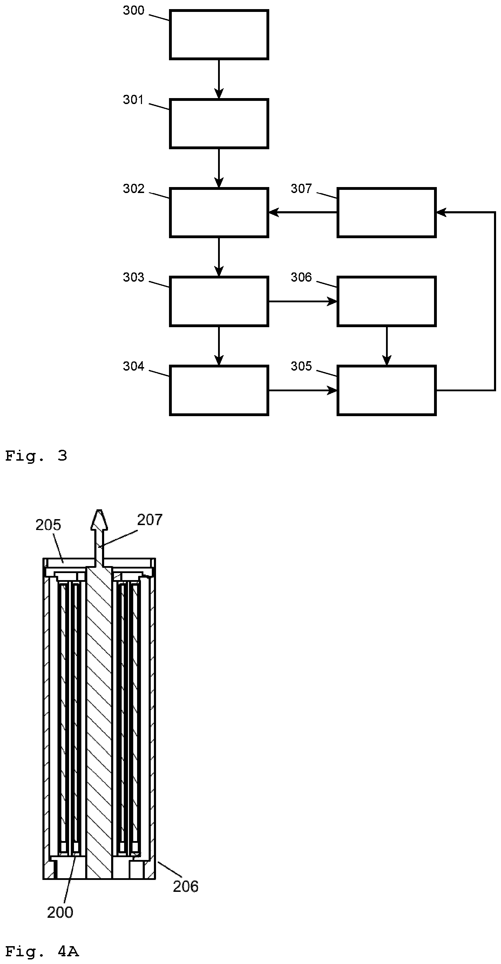

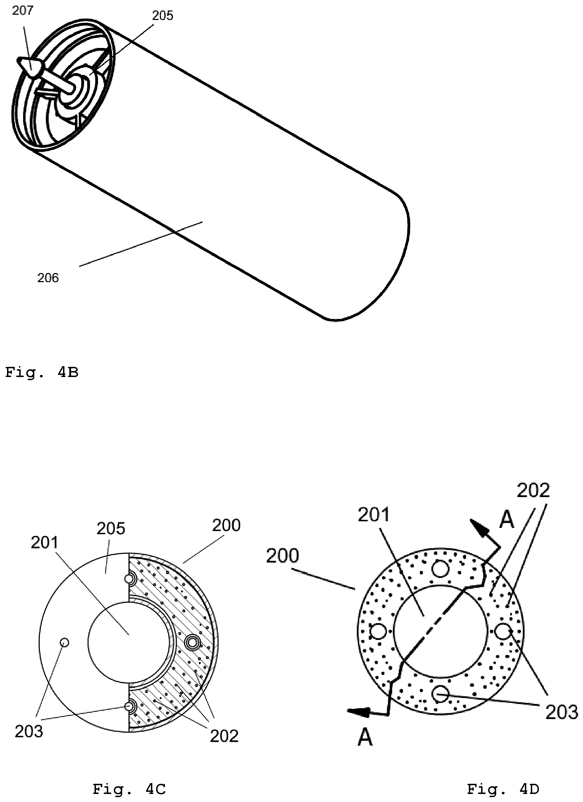

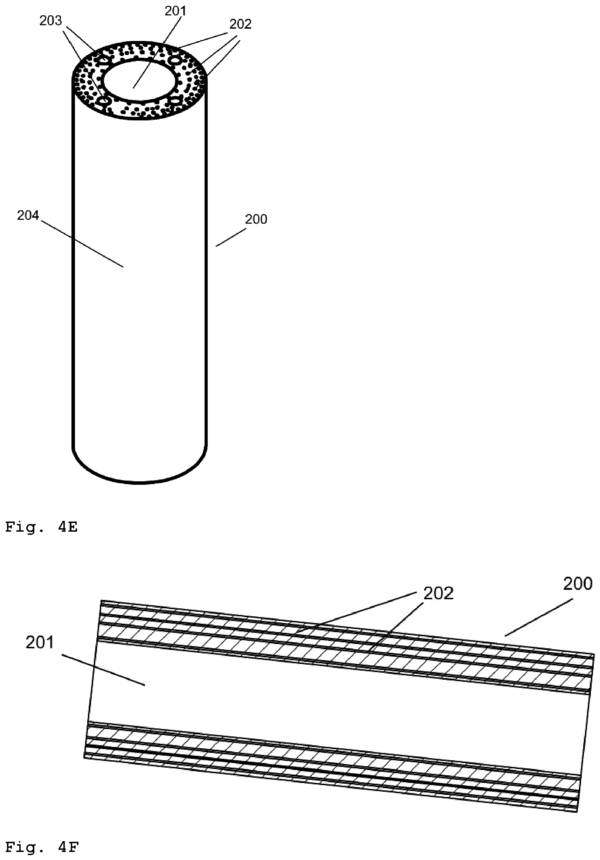

The target **200** according to another embodiment, placed in the container **206,** is shown in a section in Fig. 4A and in a perspective in Fig. 4B. In the packing step **103,** the openwork target **200** is placed in the container **206,** which is filled with helium and closed. The helium pressure in the container is usually kept above the atmospheric pressure to ensure tightness. This assures that the helium in which the target is held is not contaminated. Fig. 4C presents the target and the container in a partial cross section showing the channels **203** and the voids **202** in the openwork structure of the target. The channels and voids are also visible in Fig. 4D showing a cross section of the target **200.** A longitudinal section is shown in Fig. 4F. As it is shown in Fig. 4E, the openwork structure of the target can be secured with an aluminum shield **204.**

The container **206** is placed in a reactor and exposed to radiation in the irradiation step **104.** By matching the dimensions of the target to the dimensions of the container, the radiation of the reactor is better utilized.

The effective density of the infill of the target's openwork structure can be adjusted to match the radiation distribution in the step of creating the model of the target.

The irradiation duration depends on the operating cycle and characteristics of the reactor. For a given target with a fixed content of uranium 235 reacting with neutrons, the efficiency of the process depends on the neutron flux at the location where the container is placed and on the neutrons energy distribution. The irradiation cross section for U235 + n reactions depends on the neutron energy, so the energy distribution in the beam is important for the process.

After irradiation, the target **200** is removed from the container in the unpacking step **105** and prepared for transportation. In the unpacking step **105,** targets made of granules introduce an additional risk of possible scattering. When the invention is used, this risk is relatively less due to the fact that the openwork structure of the target **200** is mechanically strong enough to not to spatter or scatter even under impact loads such as after a fall. The risk of spreading of the highly radioactive material when the container with the cooling gas is being opened and the target is being removed is minimized.

Next, the target **200** is transported from the reactor to the laboratory. The transport step **106** should be kept as short as possible, so it is best if the laboratory is close to the reactor. In such a case, the losses due to the decay of molybdenum 99 are decreased, and the risk inherent in the transport of radioactive materials is reduced.

The laboratory performs the step of chemical treatment **107** of the target and the molybdenum extraction step **108** as disclosed in US Patent 3,799,883. A person skilled in the art is routinely able to propose other methods for obtaining molybdenum 99.

The chemical treatment may be carried out in a way that allows one to recover **109** uranium from the waste after obtaining molybdenum and reuse it. The concept of recovering irradiated materials and using them to make another targets is disclosed in US patent application US20140226774. The uranium recovered in this way is less enriched, therefore it may be necessary to mix **111** it with some more enriched uranium to obtain the correct enrichment degree. An applicable chemical treatment method is also disclosed in Chapter 2. "Molybdenum-99 / Technetium-99m Production and Use" of the book entitled National Research Council. 2009. Medical Isotope Production Without Highly Enriched Uranium. Washington, DC: The National Academies Press. https://doi.org/10.17226/12569.

Due to the fact that the irradiation cross section for the U235+n reactions depends on the neutron energy, the energy distribution in the beam is important for the process. A direct consequence of the inhomogeneous beam energy distribution is that the simplest, regular, openwork spatial structures of targets may result in suboptimal process efficiency.

According to the invention, the target is fabricated according to the model in an additive process - the so-called 3D printing. The advantage of the invention that it is possible to carry out dedicated calculations to optimize both the effective density and the shape of the target for a given type of reactor, for example using software that simulates the interaction of neutrons with the target. As a consequence, the spatial structure of the target can be adapted in a convenient process of rapid prototyping including simulation calculations to the planned process parameters, to the specific chambers or channels of a given reactor and to the specific containers.

Better effects can be achieved by optimizing the model of the openwork structure of the target.

The boundary conditions **300** for designing the target according to the invention are:
- composition of the LEU material of the target;
- container dimensions;
- process parameters - timing and intensity of irradiation;
- energy distribution in the beam at the location where the container is placed in the reactor chamber.

Next, based on the design assumptions of the model, initial conditions and constraints of optimization are set 301 and the model is generated **302.**

The generated model is subjected to irradiation simulation **303,** and simulation returns the amount of molybdenum 99 that can be obtained for a given shape of the openwork structure of the target. For this purpose, one can use ready-made simulators developed by the Nuclear Energy Agency (NEA), https://www.oecd-nea.org/, and Los Alamos National Laboratory, e.g. the MCNP software package.

The results of the irradiation simulation are fed to the optimizer, which determines the target's shape changes **307** in the optimization process **305,** the changes being taken into account when the next model to simulate is generated **302.**

There are methods and even software packages as well as parameterization data sets including cross sections for determining the amounts of obtained specific isotopes. Such programs are available, for example, through the Nuclear Energy Agency (NEA) https://www.oecd-nea.org/ or Los Alamos National Laboratory (MCNP package used by NCBJ). In this situation, it can be clearly stated that the person skilled in the art is able to adjust the particular arrangement of target and voids to a given reactor.

Additionally, a thermodynamic simulation step **304** can be introduced to facilitate the control of the temperature during irradiation and to take it into account in the optimization **305.**

The goal function of the optimization process **305** is the amount of obtained molybdenum 99 determined in the step **306** of retrieving from the irradiation simulation results. The temperature values determined in the thermodynamic simulation are compared with the given boundary conditions, i.e. the temperatures safe in a given reactor.

The model subjected to the optimization is adapted to the dimensions of the container, which in turn is adapted to the specific reactor. Although typically the containers are cylindrical in shape with the positioning pin **207,** there is considerable freedom to shape the model using various known infill patterns with different cell sizes. In addition, channels that facilitate cooling can be provided in the openwork structure.

Having read this description, a person skilled in the art of 3D printing will be able to easily propose numerous alternative openwork structures including spatial lattices, mesh structures or porous structures. Having read this description, a person skilled in the art will be able to propose numerous adequate optimization techniques, and on the basis of literature and experimental data, to develop other techniques for simulating the beam distribution or gas cavitation. Accordingly, the examples provided are to be considered merely illustrative of the scope of the invention and are not intended to limit the scope of protection as defined in the appended claims.

## Claims

1. A method of fabricating a target (**200)** with predetermined mass and volume from low-enriched uranium, in which:
in a material preparation step (**101**), a powdered or granular construction material comprising low-enriched uranium is prepared;
in a fabrication step (**102**), the target (**200**) is made of said construction material, the target (**200**) having a shape adopted enclosing it in a container to be placed in a reactor, wherein
the fabrication step (**102**) is carried out in an additive process by applying successive layers of the construction material and selectively heating by means of a laser,
**characterized in that**
prior to the fabrication of the target (**200**), there is created a digital model of the target (**200**) with dimensions that enable fitting into the space inside the container and a volume filled with an infill pattern having effective density lower than 80% of the uranium density, wherein
said model defines an openwork cohesive body.

2. Method according to the claim 1 **characterized in that** the model of the target (**200**) is formed with dimensions substantially matching the dimensions of the container such that the model fills the container with a margin ranging from 0.5 mm to 2 mm in each dimension such that the volume of the model substantially corresponds to the volume of the container, and arrangement of voids and the infill pattern of the openwork structure are selected so as to ensure the assumed mass of the target (**200**) for a given volume.

3. Method according to the claim 1 or 2 **characterized in that** the arrangement of the voids in the structure of the target (**200**) and the distribution of the effective density of the infill pattern are selected in the steps of simulation (**303**) and optimization (**305**) of the absorption of a given neutron flux.

4. Method according to the claim 1, 2 or 3 **characterized in that** the arrangement of the voids in the structure of the target (**200**) is selected by simulating and optimizing the gas flow.

5. Method according to any of the claims 1 to 4 **characterized in that** during the additive process unused granular material is collected in the recovery step (**110**) and stored for reuse.

6. A process of producing molybdenum 99 comprising
a step of fabricating (**102**) a target (**200**) from construction material containing low-enriched uranium,
a step of packing (**103**) the target (**200**) into a container,
a step of irradiating (**104**) by placing the container with the target (**200**) in a reactor followed by
an unpacking step (**105**),
a transport step (**106**),
and a step of chemical treatment (**107**) of the target for obtaining (**108**) molybdenum 99, **characterized in that** the step of fabricating (**102**) a target is carrier out as specified any of the claims 1 to 5.

7. Process according to the claim 6 **characterized in that** during or after the chemical treatment (**107**), unused uranium is recovered (**109**) and reused in the preparation of construction material.

8. Process according to the claim 7 **characterized in that** uranium recovered in the recovery step (**109**) is used to prepare the construction material by mixing with enriched uranium.

9. A target (**200**) made of a material containing low-enriched uranium for placing in a reactor **characterized in that** it has an openwork cohesive structure made with an infill pattern giving the effective density of less than 80%.

10. The target (**200**) according to the claim 9 **characterized in that** it is shaped like a hollow cylinder with a central hole (**201**).

11. The target (**200**) according to the claim 10 **characterized in that** the hollow cylinder is provided with additional channels (**203**).

12. The target (**200**) according to the claim 9 or 10 or 11 **characterized in that** the openwork structure is made according to a mathematical model obtained as a result of optimization in an additive process by applying successive layers of a construction material containing low-enriched uranium and selectively heating this construction material with a laser.

## Patentansprüche

1. Verfahren zum Herstellen eines Targets (**200**) mit vorbestimmter Masse und vorbestimmtem Volumen aus schwach angereichertem Uran, bei dem:
in einem Materialaufbereitungsschritt (**101**) ein pulverförmiges oder granulatförmiges Baumaterial mit schwach angereichertem Uran hergestellt wird;
in einem Schritt des Herstellens (**102**) das Target (**200**) aus dem Baumaterial hergestellt wird, wobei das Target (**200**) eine Form hat, die es durch Einschließen in einen Behälter annimmt, der in einen Reaktor eingebracht werden soll, wobei
der Schritt des Herstellens (**102**) in einem additiven Prozess durch Auftragen aufeinanderfolgender Schichten des Baumaterials und selektives Erhitzen mittels eines Lasers durchgeführt wird,
**dadurch gekennzeichnet, dass**
vor der Herstellung des Targets (**200**) ein digitales Modell des Targets (**200**) mit Abmessungen erstellt wird, die es ermöglichen, in den Raum innerhalb des Behälters zu passen, und ein Volumen, das mit einem Füllmuster gefüllt ist, das eine effektive Dichte von weniger als 80 % der Uran-Dichte aufweist, wobei
das Modell einen durchbrochenen, zusammenhängenden Körper definiert.

2. Verfahren nach Anspruch 1, **dadurch gekennzeichnet, dass** das Modell des Targets (**200**) mit Abmessungen gebildet wird, die im Wesentlichen mit den Abmessungen des Behälters übereinstimmen, so dass das Modell den Behälter mit einem Spielraum von 0,5 mm bis 2 mm in jeder Abmessung ausfüllt, so dass das Volumen des Modells im Wesentlichen dem Volumen des Behälters entspricht, und dass die Anordnung von Hohlräumen und das Füllmuster der durchbrochenen Struktur so gewählt werden, dass die angenommene Masse des Targets (**200**) für ein gegebenes Volumen gewährleistet ist.

3. Verfahren nach Anspruch 1 oder 2, **dadurch gekennzeichnet, dass** die Anordnung der Hohlräume in der Struktur des Targets (**200**) und die Verteilung der effektiven Dichte des Füllmusters in den Schritten der Simulation (**303**) und Optimierung (**305**) der Absorption eines gegebenen Neutronenflusses ausgewählt werden.

4. Verfahren nach Anspruch 1, 2 oder 3, **dadurch gekennzeichnet, dass** die Anordnung der Hohlräume in der Struktur des Targets (**200**) durch Simulation und Optimierung der Gasströmung ausgewählt wird.

5. Verfahren nach einem der Ansprüche 1 bis 4, **dadurch gekennzeichnet, dass** während des additiven Prozesses unbenutztes granulatförmiges Material in dem Rückgewinnungsschritt (**110**) gesammelt und zur Wiederverwendung gelagert wird.

6. Verfahren zur Herstellung von Molybdän 99, umfassend
einen Schritt des Herstellens (**102**) eines Targets (**200**) aus
Baumaterial, das schwach angereichertes Uran enthält,
einen Schritt des Packens (**103**) des Targets (**200**) in einen Behälter,
einen Schritt der Bestrahlung (**104**) durch Einbringen des Behälters mit dem Target (**200**) in einen Reaktor, gefolgt von
einem Schritt des Entpackens (**105**),
einem Transportschritt (**106**),
und einem Schritt der chemischen Behandlung (**107**) des Targets
zum Gewinnen (**108**) von Molybdän 99, **dadurch gekennzeichnet, dass** der Schritt des Herstellens (**102**) eines Targets gemäß einem der Ansprüche 1 bis 5 durchgeführt wird.

7. Verfahren nach Anspruch 6, **dadurch gekennzeichnet, dass** während oder nach der chemischen Behandlung (**107**) nicht verwendetes Uran zurückgewonnen (**109**) und bei der Herstellung von Baumaterial wiederverwendet wird.

8. Verfahren nach Anspruch 7, **dadurch gekennzeichnet, dass** das im Rückgewinnungsschritt (**109**) zurückgewonnene Uran verwendet wird, um das Baumaterial durch Vermischen mit angereichertem Uran herzustellen.

9. Target (**200**) aus einem Material, das schwach angereichertes Uran enthält, zum Einsetzen in einen Reaktor, **dadurch gekennzeichnet, dass** dieses eine durchbrochene zusammenhängende Struktur aufweist, die mit einem Füllmuster hergestellt ist, das eine effektive Dichte von weniger als 80% ergibt.

10. Target (**200**) nach Anspruch 9, **dadurch gekennzeichnet, dass** dieses wie ein Hohlzylinder mit einem zentralen Loch (201) geformt ist.

11. Target (**200**) nach Anspruch 10, **dadurch gekennzeichnet, dass** der Hohlzylinder mit zusätzlichen Kanälen (**203**) versehen ist.

12. Target (**200**) nach Anspruch 9 oder 10 oder 11, **dadurch gekennzeichnet, dass** die durchbrochene Struktur nach einem mathematischen Modell hergestellt wird, das als Optimierungsergebnis in einem additiven Prozess durch Auftragen aufeinanderfolgender Schichten eines Baumaterials, das schwach angereichertes Uran enthält, und selektives Erhitzen dieses Baumaterials mit einem Laser erhalten wird.

## Revendications

1. Méthode de fabrication d'une cible (**200**) de masse et de volume prédéterminés à partir d'uranium faiblement enrichi, dans laquelle:
dans une étape de préparation de matériau (**101**), un matériau de construction en poudre ou en granulés comprenant de l'uranium faiblement enrichi est préparé;
dans une étape de fabrication (**102**), la cible (**200**) est fabriquée en ledit matériau de construction, la cible (200) ayant une forme adoptée pour l'enfermer dans un récipient devant être placé dans un réacteur, dans laquelle
l'étape de fabrication (**102**) est réalisée dans un procédé additif par application de couches successives du matériau de construction et le chauffage sélectif au moyen d'un laser,
**caractérisée en ce que**
avant la fabrication de la cible (**200**), un modèle numérique de la cible (**200**) est créé avec des dimensions qui permettent de l'ajuster dans l'espace à l'intérieur du récipient et un volume rempli d'un motif de remplissage ayant une densité effective inférieure à 80 % de la densité de l'uranium, dans laquelle
ledit modèle définit un corps cohésif ajouré.

2. Méthode selon la revendication 1, **caractérisée en ce que** le modèle de la cible (**200**) est formé avec des dimensions concordant sensiblement avec les dimensions du récipient de sorte que le modèle remplisse le récipient avec une marge allant de 0,5 mm à 2 mm dans chaque dimension, de sorte que le volume du modèle corresponde sensiblement au volume du récipient, et l'agencement des vides et le motif de remplissage de la structure ajourée sont choisis de manière à assurer la masse supposée de la cible (**200**) pour un volume donné.

3. Méthode selon la revendication 1 ou 2, **caractérisée en ce que** l'agencement des vides dans la structure de la cible (**200**) et la répartition de la densité effective du motif de remplissage sont choisis dans les étapes de simulation (**303**) et d'optimisation (**305**) de l'absorption d'un flux neutronique donné.

4. Méthode selon la revendication 1, 2 ou 3, **caractérisée en ce que** l'agencement des vides dans la structure de la cible (**200**) est sélectionné en simulant et en optimisant le flux de gaz.

5. Méthode selon l'une quelconque des revendications 1 à 4, **caractérisée en ce que** pendant le procédé additif, le matériau granulaire non utilisé est collecté dans l'étape de récupération (**110**) et stocké pour être réutilisé.

6. Procédé de production de molybdène 99 comprenant
une étape de fabrication (**102**) d'une cible (**200**) à partir de matériau de construction contenant de l'uranium faiblement enrichi,
une étape d'emballage (**103**) de la cible (**200**) dans un récipient,
une étape d'irradiation (**104**) en plaçant le récipient avec la cible (**200**) dans un réacteur, suivie de
une étape de déballage (**105**),
une étape de transport (**106**),
et une étape de traitement chimique (**107**) de la cible pour obtenir (**108**) du molybdène 99, **caractérisé en ce que** l'étape de fabrication (**102**) d'une cible est réalisée selon l'une quelconque des revendications 1 à 5.

7. Procédé selon la revendication 6, **caractérisé en ce que** pendant ou après le traitement chimique (**107**), l'uranium non utilisé est récupéré (**109**) et réutilisé dans la préparation du matériau de construction.

8. Procédé selon la revendication 7, **caractérisé en ce que** l'uranium récupéré dans l'étape de récupération (**109**) est utilisé pour préparer le matériau de construction par mélange avec de l'uranium enrichi.

9. Cible (**200**) fabriquée en un matériau contenant de l'uranium faiblement enrichi destinée à être placée dans un réacteur, **caractérisée en ce qu'elle** présente une structure cohésive ajourée réalisée avec un motif de remplissage donnant une densité effective inférieure à 80 %.

10. Cible (**200**) selon la revendication 9, **caractérisée en ce qu'elle** a la forme d'un cylindre creux avec un trou central (**201**).

11. Cible (**200**) selon la revendication 10, **caractérisée en ce que** le cylindre creux est pourvu de canaux (**203**) supplémentaires.

12. Cible (**200**) selon la revendication 9 ou 10 ou 11, **caractérisée en ce que** la structure ajourée est fabriquée selon un modèle mathématique obtenu à la suite d'une optimisation dans un procédé additif par application de couches successives d'un matériau de construction contenant de l'uranium faiblement enrichi, et le chauffage sélectif de ce matériau de construction avec un laser.
